# EUROPEAN PATENT APPLICATION

(11) **EP 2 942 265 A1**
(43) Date of publication of application: **11.11.2015**
(21) Application number: 15166127.9
(22) Date of filing: 01.05.2015
(51) Int. Cl.: B62H 3/04, B60R 9/10

(54) **DEVICE FOR SUPPORTING A CYCLE**

(30) Priority: 05.05.2014 NL 2012755
(71) Applicant: Falco B.V., 7671 EJ Vriezenveen (NL)
(72) Inventor: Van Berk, Hendrikus, 3981 GL Bunnik (NL)
(74) Representative: Slikker, Wilhelmina Johanna

(57) **Abstract**

The present invention relates to a device (1, 101) for supporting a cycle, comprising:
- at least three support points (8, 30, 36, 108, 130, 136) configured to support a wheel (52) of the cycle;
- wherein at least one support point is a substantially fixed support point;
- wherein at least one other support point is a displaceable support point displaceable relative to the at least one substantially fixed support point;
- wherein the at least three support points are arranged in a substantially upright plane; and
- wherein support points are positioned relative to each other such that a wheel axle (54) of a wheel supported by the at least three support points is situated between the rear and front support points.

## Description

The invention relates to a device for supporting a cycle.

Known cycle support devices (cycle parking systems) generally comprise a frame which can be anchored to the ground surface or to an immovable object and which has a bracket in which a wheel of the cycle can be clampingly received. Such bicycle racks are generally placed at locations where many bicycles are temporarily parked, and have the object of organizing this parking of bicycles to some extent.

The traditional cycle rack has the drawback that it is adapted to a limited range of wheel sizes (wheel diameter and tyre thickness), whereby many bicycles are not optimally supported and are supported in unstable manner. Because the fit does not correspond, the bicycle falls sideways in the bicycle rack. The inclining position causes a torque on the wheel, whereby the worse the fit, the greater the chance of damage, i.e. the chance of the wheel going out of true. In order to prevent the wheel going out of true many users avoid public cycle racks and place their bicycle adjacently thereof or elsewhere This results in disorganized parking.

It should moreover be noted here that the traditional cycle racks generally comprise brackets which are too large for most children's bicycles, whereby these are then placed adjacently of the rack anyway. There is therefore a need for a cycle rack which is suitable for a relatively wide range of wheel sizes (wheel diameter and tyre thickness).

Cycle racks in which the bicycle is suspended, for instance with the wheel rim on a hook or with the handlebar in a bracket, solve some of the above stated problems, but have the drawback that the bicycle has to be lifted.

An object of the present invention is to provide a cycle support device wherein said drawbacks do not occur, or at least do so to lesser extent.

Said object is achieved according to the invention with a device for supporting a cycle, comprising:
- at least three support points configured to support a wheel of the cycle;
- wherein at least one support point is a substantially fixed support point;
- wherein at least one other support point is a displaceable support point displaceable relative to the at least one substantially fixed support point;
- wherein the at least three support points are arranged in a substantially upright plane; and
- wherein support points are positioned relative to each other such that a wheel axle of a wheel supported by the at least three support points is situated between the rear and front support points.

For the sake of completeness it is noted that the three support points together provide a three-point support and that the word 'point' should also be understood in this context. The support point can comprise various forms and - as even specified as a preferred embodiment below - can also comprise a tapering form such as a V-shaped gutter.

It is further noted that the rear support point in particular is a fixed support point and the front support point in particular is a displaceable support point.

Under the influence of gravitational force the wheel will tend to roll off the at least one fixed support point, and thereby moves in the direction of the other support points. A stable support is hereby provided under the influence of gravitational force of the wheel of the bicycle.

Because the at least three support points are arranged in a substantially upright plane, the wheel of the cycle is supported in a substantially upright position. The wheel is loaded here in the desired direction, whereby going out of true - which can result from a lateral load due to hanging sideways as a result of insufficient support of the wheel - is prevented. The support points are positioned here such that a wheel axle of a wheel supported by the at least three support points is situated between the rear and front support points. It is noted here that 'between' is defined in the lying plane, i.e. substantially in horizontal direction. The wheel axle can optionally be situated here at a higher level than the support points. Because the wheel axle of the wheel is situated in front of the rear support point, the wheel will tend to roll off the rear support point under the influence of gravitational force. The wheel thereby presses against the at least one displaceable support point. A cycle support device is thus provided in which cycles with different wheel sizes can be supported in stable manner.

The rear fixed point is disposed higher, as seen in vertical direction, than a lowest point of a wheel supported by the at least three support points. Under said influence of gravitational force the wheel can hereby roll off the rear fixed support point in the direction of the at least one displaceable support point.

A wheel supported by the at least three support points is supported in particular by at least one fixed support point and at least one displaceable support point, so that the wheel rests on these support points and the displaceable support point adjusts in displaceable manner under the influence of the gravitational force of the wheel.

According to a further preferred embodiment at least two displaceable support points are provided, this enhancing the flexibility of the device. The two displaceable support points are displaceable relative to the fixed point.

When the at least two displaceable support points are arranged according to a further embodiment on a displaceable member, they are displaceable together relative to the fixed support point. Because a single displaceable member suffices, a simple and robust cycle support device results.

It is particularly advantageous according to yet another preferred embodiment for the displaceable member to comprise a member arranged hingedly on a frame. A hinge connection can take a simple and robust form, and the tilting movement which the displaceable member can describe around the hinge suffices for an optimal adjustment to different wheel diameters.

The distance between the fixed point and the pivot point of the hinged member is preferably smaller in diameter than a smallest standard use wheel size. The device according to the invention can hereby provide a stable support for different wheel sizes in simple manner. In practical manner the distance between the fixed point and the pivot point of the hinged member is a maximum of 22 inches or 55.88 cm. In the Netherlands at least this is the smallest standard use wheel size for non-folding cycles for people of a height of more than 1.20 m.

The distance between the fixed point and the pivot point is particularly a distance chosen as desired here, which is not adjustable after manufacture of the device.

The frame can be manufactured from tubes, more particularly from steel tubes, which enables relatively simple manufacture and a robust embodiment. A robust embodiment is a requirement for application in a public cycle parking facility.

According to yet another preferred embodiment, the displaceable member extends in the substantially upright plane described by the three support points. The displaceable member hereby forms a front stop for the wheel and is attachable if desired to a wall of an immovable object.

Although it is possible to envisage a displaceable member functioning as front stop being combined with a fixed support point on the ground surface, such as an upright concrete curb stone or a paving sloping downward at an incline, according to yet another preferred embodiment the device comprises a frame on which the at least three support points are arranged. The cycle support device according to the invention can thereby be supplied as a single unit. A cycle rack with a plurality of bicycle parking spaces is created by assembling a plurality of units on a frame. So-called high/low positions can be applied in the rack, this enabling a maximum parking density.

According to yet another preferred embodiment, the displaceable member extends substantially in height direction so that an imaginary line between the two displaceable support points arranged on the displaceable member describes an angle α in the range of -10° up to and including +30° relative to the vertical direction. The device is hereby more robust and requires less maintenance, whereby the cycle support device is suitable for use in public spaces. Because the at least two support points are arranged substantially one above the other, a simple hinge connection without a spring will suffice. A spring may be necessary in other arrangements in order to hold the displaceable member in a substantially desired position and press it with some bias against the wheel.

When at least one of the displaceable support points comprises a tapering form, the device becomes suitable for supporting bicycles with different tyre sizes. It is advantageous for one or more support points to have a form which "positions" the tyre, whereby the position is defined unambiguously during pressing into the support point. It is relevant here that the radius of the point of the positioning form is smaller than the radius of the cross-section of the smallest available tyre. A racing tyre of for instance about 19 mm width up to a mountain bike tyre of for instance about 122 mm width can hereby be supported in stable manner by the same device. It is advantageous for a plurality of, and preferably at least three, support points to be embodied with such a tapering form, wherein the tapering form can differ per support point.

According to yet another preferred embodiment a clearance-free hinge is applied. This hinge can comprise a bendable/flexible element with a limited angular rotation, for instance a plastic or rubber or thin metal connection. A plastic or rubber flexible element can be provided with a reinforcement for strengthening purposes, for instance a rubber connection reinforced with wire/wires. Compared to for instance a pin-hole hinge, such an embodiment is on one hand robust and on the other imparts a desired degree of flexibility and is clearance-free. In a preferred embodiment the hinge comprises a rubber connection reinforced with steel wire.

According to yet another preferred embodiment, the frame can be anchored to the ground surface or to an immovable object, whereby it is particularly suitable for application as public cycle parking facility.

According to an alternative preferred embodiment, the frame forms part of a cycle carrier arrangeable on a vehicle. Arranging such a cycle carrier on the roof of a car or on a trailer enables bicycles with different wheel sizes and tyre widths to be supported in stable manner during transport thereof.

Preferred embodiments of the present invention are further elucidated in the following description with reference to the drawing, in which:
Figure 1 is a perspective view of a cycle support device according to the invention;
Figure 2 is a perspective view from the rear of the cycle support device shown in figure 1;
Figure 3 is an enlarged detail section of a hinge of the cycle support device shown in figures 1 and 2;
Figure 4 is a schematic side view of the cycle support device shown in figures 1-3 while a wheel with a small wheel size is supported therein;
Figure 5 is a schematic side view of the cycle support device shown in figures 1-3 while a wheel with a large wheel size is supported therein;
Figure 6 is a schematic view of the play of forces occurring in figure 4 while the wheel with the small wheel size is supported;
Figure 7 is a schematic view of the support points of the situation shown in figure 5 in which a wheel with a large wheel size is supported;
Figure 8 is a detailed view of a support point with a tapering form;
Figure 9 is a cross-sectional view of the flexible hinge element of figure 3;
Figure 10 is a cross-sectional view of an alternative hinge connection; and
Figure 11 is a perspective view of an alternative embodiment from plate material.

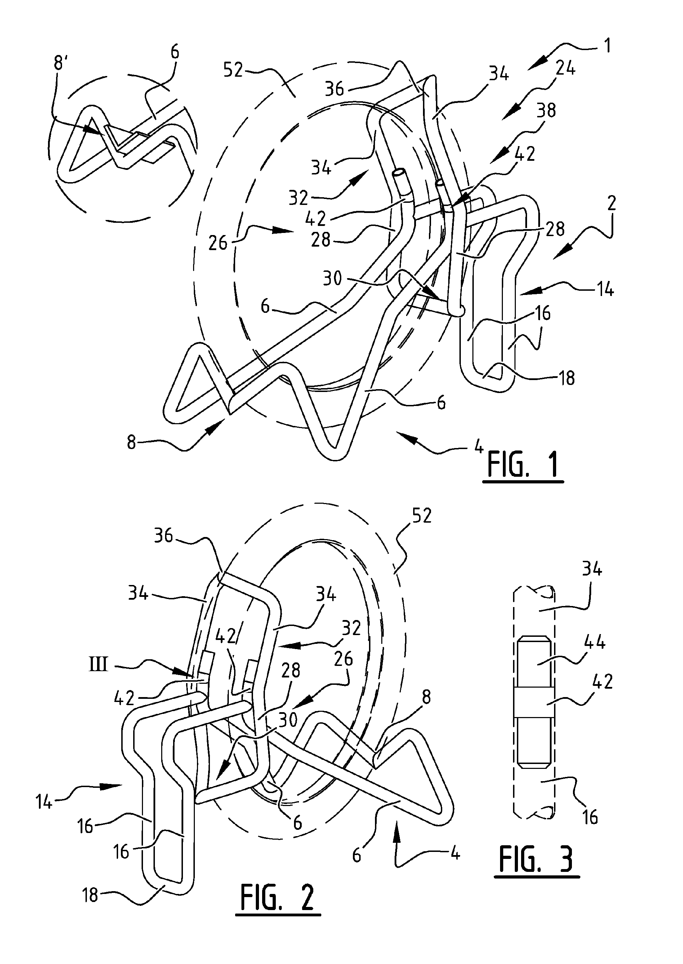

Figures 1 and 2 show a cycle support device 1, referred to below simply as cycle rack 1. In the shown embodiment this cycle rack 1 comprises a frame 2 which consists of a first frame part 4, a second frame part 14 and a displaceable member 24.

First frame part 4 and second frame part 14 together form the base with which frame 1 supports on ground surface 50, to which frame 1 can be anchored if desired.

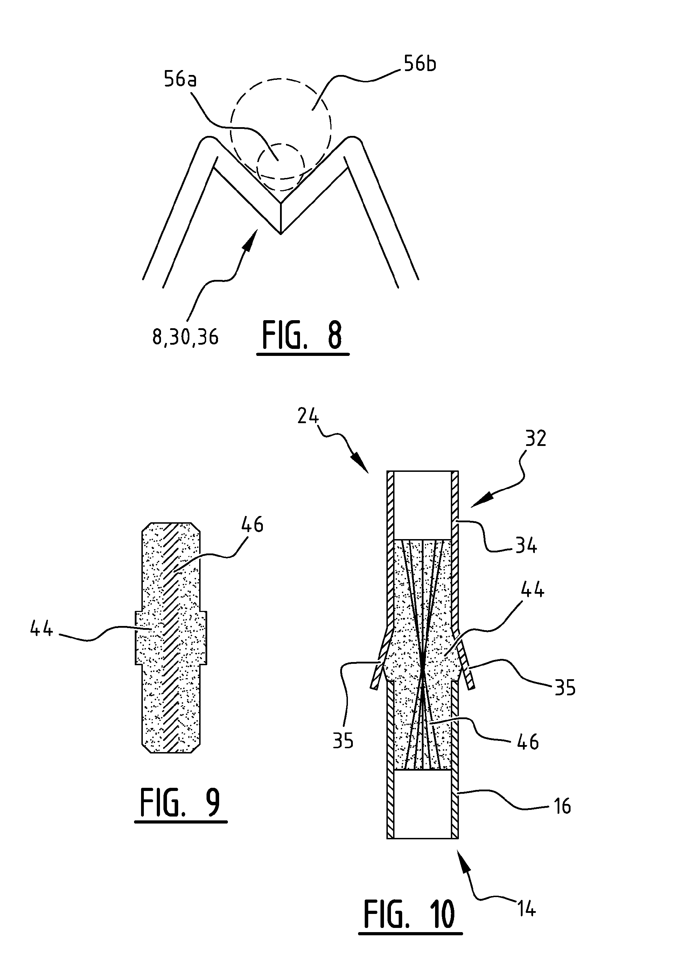

First frame part 4 comprises legs 6 between which a support point 8 for supporting a wheel 52 of the cycle is formed. In a preferred embodiment this support point 8 is tapering, as will be elucidated below with reference to figure 8. Support point 8 can optionally be provided with a gutter 8'.

Embodiments (not shown) can also be envisaged wherein first frame part 4 is omitted, and wherein the support point 8 formed thereby is formed for instance by a concrete curb stone or other (artificial) height difference in ground surface 50.

Second frame part 14 also comprises two legs 16 and the connection therebetween forms a support part 18 with which second frame part 14 supports on or can be anchored to ground surface 50. On the side remote from support part 18 legs 16 are connected via a hinge connection 42 to legs 34 of a second part 32 of displaceable member 24 (Figure 3).

In the embodiment shown in figures 1 and 2 displaceable member 24 is assembled from a first part 26 and a second part 32 which are mutually connected with a connecting weld 38. First part 26 comprises legs 28 which form at the position of their connection a displaceable support point 30 of cycle rack 1. In similar manner second part 32 comprises legs 34 and a displaceable support point 36.

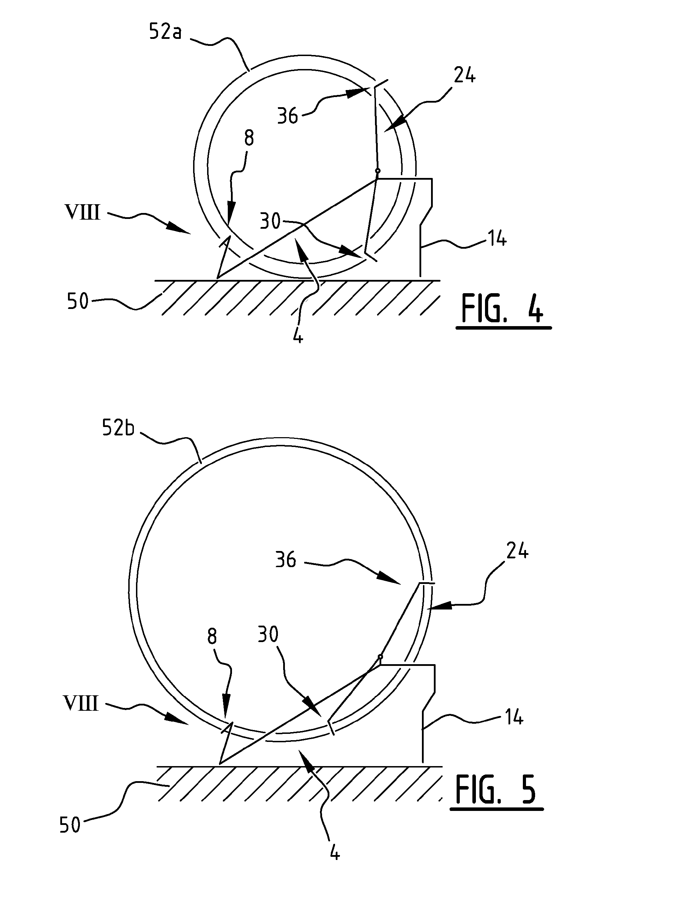

The clamping action is now further elucidated with reference to figures 4-7, wherein cycle rack 1 supports a wheel 52a with a small wheel size (e.g. 20 or 22 inches) in figure 4 and supports a wheel 52b with a large wheel size (e.g. 26 or 29 inches) in figure 5. Displaceable member 24 is pivotable relative to frame 2, which is formed by first frame part 4 and second frame part 14. Displaceable member 24 is hereby able to change the position of the displaceable support points 30, 36 such that - simultaneously with the fixed support point 8 - they support wheel 52a, 52b.

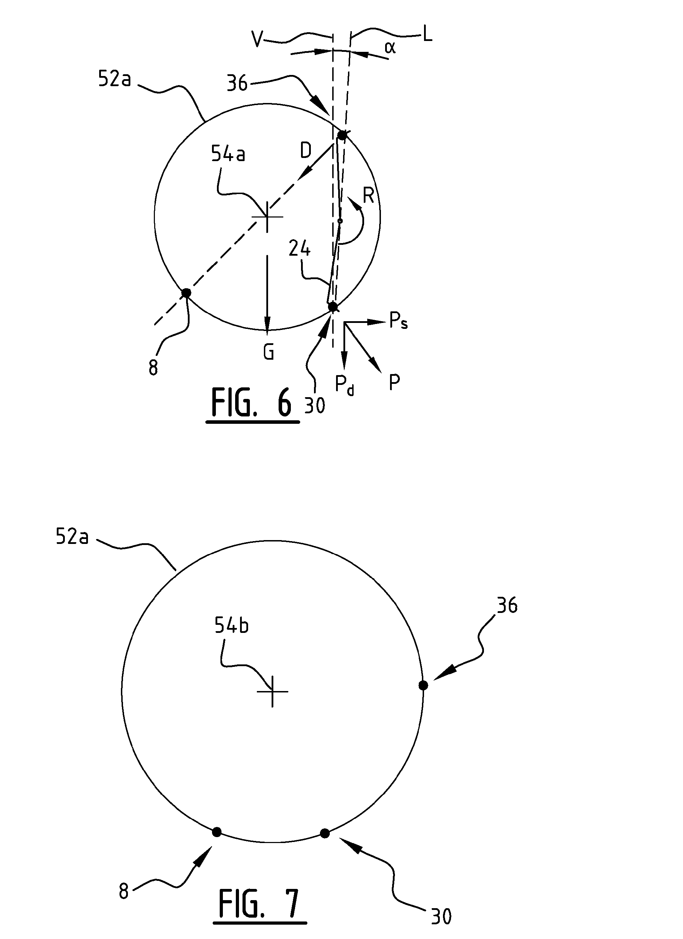

The play of forces is further elucidated in figure 6, where wheel axle 54a of wheel 52a exerts a downward force G under the influence of gravitational force. As a result of the force G the wheel will tend to roll over the fixed support point 8 but is stopped from doing so by the displaceable support point 30. A force P, which can be resolved into a downward directed component P_{d} and a laterally directed component Pₛ, is exerted on displaceable support point 30. Displaceable member 24 will pivot and rotate in the direction of arrow R as a result of the lateral component Pₛ. The displaceable support point 36 is hereby pressed against wheel 52a in the direction D. This play of forces can only be effective if wheel axle 54a, 54b of a wheel supported by the three support points 8, 30, 36 is situated between rear point 8 and front support point 30 or 36. Figure 7 shows the positions of support points 8, 30, 36 for a wheel 52b with a larger wheel size, for instance 26 or 29 inches.

Figure 8 shows a support point 8, 30, 36 with a tapering form, whereby cycle rack 1 is suitable for supporting cycles with different tyre sizes, such as a racing tyre 56a of about 19 mm width up to and including a 122 mm wide mountain bike tyre 56b. It is noted here that the angle of opening of the tapering form can be chosen as desired per support point. A larger angle of opening provides a self-releasing function, wherein in the case of a lateral load the wheel of the bicycle will be released before the wheel goes out of true. A more acute angle of opening can on the other hand achieve the effect that a wheel remains properly clamped even in the case of a lateral load. In a frame with a plurality of bicycles it is thus possible to prevent all bicycles tipping over like a row of dominoes when one bicycle tips over.

A cross-section through flexible member 44 of figures 1-3, which is for instance manufactured from rubber, is shown in figure 9. An advantage of a flexible member 44 of rubber is that a desired spring characteristic can be imparted to the flexible member, whereby the clamping action of cycle rack 1 is further improved.

Figure 10 shows in detail a connection according to an alternative embodiment, wherein legs 34 are provided on their underside with a widened portion 35 with which flexible member 44, which imparts flexibility to hinge 42, is shielded from the surrounding area. A hinge 42 embodied in this way is less susceptible to vandalism.

In both figure 9 and figure 10 the rubber flexible member 44 of hinge connection 42 is provided with strengthening members 46, such as for instance pieces of metal or plastic wire.

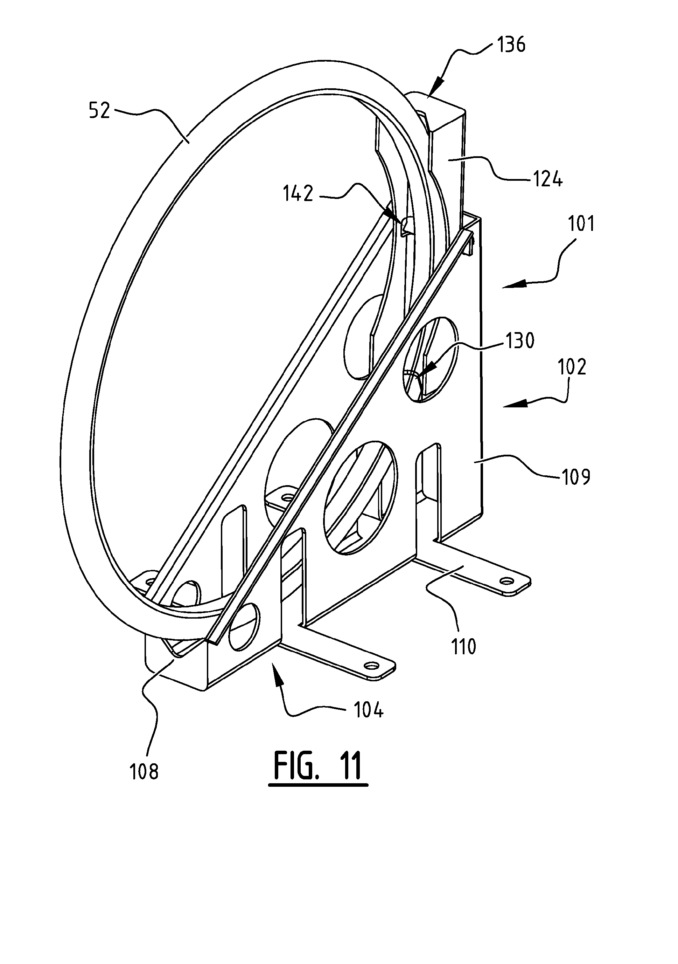

Finally, figure 11 shows an alternative embodiment of a cycle rack 101 manufactured from plate material. Frame 102 comprises a first frame part 104 which forms a first support point 108. Displaceable member 124 is mounted hingedly on frame part 104 with a conventional hinge 142. The displaceable support points 130, 136 are provided on displaceable member 124. Side walls 109 of first frame part 104 are provided with material-saving openings, and mounting strips 110 are strips 110 folded outward from the plate material of side walls 109 with which cycle rack 101 can be anchored to the ground surface.

Although they show preferred embodiments of the invention, the above described embodiments are intended solely to illustrate the present invention and not to limit the scope of the invention in any way. When measures in the claims are followed by reference numerals, such reference numerals serve only to contribute toward understanding of the claims, but are in no way limitative of the scope of protection. It is particularly noted that the skilled person can combine technical measures of the different embodiments. The rights described are defined by the following claims, within the scope of which many modifications can be envisaged.

## Claims

1. Device (1, 101) for supporting a cycle, comprising:
- at least three support points (8, 30, 36, 108, 130, 136) configured to support a wheel (52) of the cycle;
- wherein at least one support point is a substantially fixed support point;
- wherein at least one other support point is a displaceable support point displaceable relative to the at least one substantially fixed support point;
- wherein the at least three support points are arranged in a substantially upright plane; and
- wherein support points are positioned relative to each other such that a wheel axle (54) of a wheel supported by the at least three support points is situated between the rear and front support points.

2. Device as claimed in claim 1, wherein at least two displaceable support points are provided.

3. Device as claimed in claim 3, wherein the at least two displaceable support points are arranged on a displaceable member.

4. Device as claimed in claim 3, wherein the displaceable member comprises a member arranged hingedly on a frame.

5. Device as claimed in claim 3 or 4, wherein the displaceable member extends in the substantially upright plane described by the three support points.

6. Device as claimed in any of the foregoing claims, wherein the device comprises a frame on which the at least three support points are arranged.

7. Device as claimed in any of the claims 3-6, wherein the displaceable member extends substantially in height direction so that an imaginary line between the two displaceable support points arranged on the displaceable member describes an angle α in the range of -10° up to and including +30° relative to the vertical direction.

8. Device as claimed in any of the foregoing claims, wherein at least one of the displaceable support points comprises a tapering form.

9. Device as claimed in any of the claims 4-8, wherein the hinge comprises a rubber connection reinforced with metal or plastic wire.

10. Device as claimed in any of the claims 1-9, wherein the frame can be anchored to the ground surface or to an immovable object.

11. Device as claimed in any of the claims 1-9, wherein the frame forms part of a cycle carrier arrangeable on a vehicle.
